# EUROPÄISCHE PATENTSCHRIFT

(11) **EP 3 623 684 B1**
(45) Veröffentlichungstag und Bekanntmachung des Hinweises auf die Patenterteilung: **07.04.2021**
(21) Anmeldenummer: 18194282.2
(22) Anmeldetag: 13.09.2018
(51) Int. Cl.: F16L 59/02

(54) **SYSTEM UMFASSEND EINE ROHRISOLIERUNG UND EIN ROHR MIT KLEMMFITTING**
SYSTEM COMPRISING A PIPE INSULATION AND A PIPE WITH COMPRESSION FITTING
SYSTÈME COMPRENANT UNE ISOLATION DE TUYAU ET UN TUYAU AVEC RACCORD DE SERRAGE

(43) Veröffentlichungstag der Anmeldung: 18.03.2020
(73) Patentinhaber: Geberit International AG, 8645 Jona (CH)
(72) Erfinder: KONIECZKA, Damian, 8645 Jona (CH)
(74) Vertreter: Frischknecht, Harry Ralph

(56) Entgegenhaltungen:
- WO-A1-96/37728
- WO-A1-02/077513
- DE-U1- 8 816 410
- DE-U1- 29 722 746
- US-A- 3 581 776

## Beschreibung

### TECHNISCHES GEBIET

Die vorliegende Erfindung betrifft ein System mit einer Rohrisolierung, einem Rohr und einem Klemmfitting nach Anspruch 1.

### STAND DER TECHNIK

Aus dem Stand der Technik sind Rohrisolierungen bekannt. Typischerweise haben die Rohrisolierungen den Nachteil, dass im Bereich eines Klemmfittings, die Rohrisolierung aufgeschnitten werden muss, so dass die Rohrisolierung über den Klemmfitting geführt werden kann. Anschliessend wird mit Klebeband die Rohrisolierung im Bereich des Fittings wieder zusammengeklebt. Diese Art der Montage von einer Rohrisolierung hat verschiedene Nachteile. Einerseits wird die Isolierwirkung im Bereich des Klemmfittings geschwächt. Andererseits ist die Montage sehr mühsam und zeitaufwändig

Aus der Figur 5 der US-A-3 581 776 ist bereits eine Rohrisolierung mit einem Isoliermantel bekannt, wobei der Isoliermantel sich um eine Mittelachse herum erstreckt und einen Hohlraum zur Aufnahme eines Rohrs vollständig umgibt und wobei die dem Hohlraum zugewandte Oberfläche des Isoliermantels eine Mehrzahl von Erhebungen und zwischen zwei Erhebungen liegenden Rillen aufweist, wobei im Querschnitt quer zur Mittelachse gesehen jeweils eine Rille je einer Erhebung diametral zum Hohlraum bzw. zur Mittelachse gegenüber liegt.

### DARSTELLUNG DER ERFINDUNG

Ausgehend vom Stand der Technik liegt der Erfindung eine Aufgabe zugrunde, ein System mit einer Rohrisolierung anzugeben, welche einfacher im Bereich eines Klemmfittings zu montieren ist.

Diese Aufgabe löst ein System nach dem Gegenstand von Anspruch 1. Demgemäss umfasst das System eine Rohrisolierung sowie ein Rohr mit einem Klemmfitting.

Die Rohrisolierung umfasst einen Isoliermantel, insbesondere aus Schaumstoff, wobei der Isoliermantel sich um eine Mittelachse herum erstreckt und einen Hohlraum zur Aufnahme des Rohrs vollständig umgibt. Die dem Hohlraum zugewandte Oberfläche des Isoliermantels weist eine Mehrzahl von Erhebungen und zwischen zwei Erhebungen liegenden Rillen auf. Im Querschnitt quer zur Mittelachse gesehen liegt jeweils eine Rille je einer Erhebung diametral zum Hohlraum bzw. zur Mittelachse gegenüber. Mit anderen Worten liegt jeder der Rillen je eine Erhebung gegenüber. Der Klemmfitting umfasst ein Klemmelement und einen Klemmring, welches Klemmelement mit dem Rohr verbindbar ist und welcher Klemmring das Klemmelement umfangsseitig mit einem Ringabschnitt und einem Klemmohr umgibt. Das Klemmohr steht radial vom Ringabschnitt ab und stellt durch eine Verformung über den Ringabschnitt eine Klemmwirkung auf das Klemmelement und das Rohr bereit. Das Klemmohr kommt in Einbaulage im Bereich einer Rille des Isoliermantels zu liegen.

Durch die jeweils gegenüberliegende Anordnung zwischen einer Rille und einer Erhebung ergeht der Vorteil, dass wenn der Isoliermantel über einen Klemmfitting geschoben wird, der Fitting mit seinem Klemmohr in eine Rille platziert werden kann und dass auf der dem Klemmohr gegenüberliegenden Seite eine Erhebung liegt, welche noch leicht komprimiert werden kann. Hierdurch kann der Widerstand, welcher der Klemmfitting beim Überschieben des Isoliermantel demselben entgegensetzt reduziert werden.

Unter der Ausdrucksweise "Rille" wird eine Struktur verstanden, welche seitlich durch Seitenwände begrenzt wird, wobei die Seitenwände von einer Grundwand abstehen. Die Seitenwände werden durch die Erhebung bereitgestellt. Zum Hohlraum hin ist die Rille offen. Die Rille kann auch als Kanal bezeichnet werden.

Unter der Ausdrucksweise "Erhebung" wird eine Struktur verstanden, welche in den Hohlraum einragt. Die Erhebung erstreckt sich dabei von der Grundwand der Rille.

Vorzugsweise ist die Zahl der Rillen und die Zahl der Erhebungen jeweils ungerade. Unter einer ungeraden Zahl werden Zahlen, die auf 1, 3, 5, 7 oder 9 enden, verstanden.

Besonders bevorzugt ist die Zahl der Rillen und die Zahl der Erhebungen jeweils zwischen 3 und 9, insbesondere zwischen 4 und 7, insbesondere 5. Das heisst, es sind insbesondere 5 Rillen und 5 Erhebungen angeordnet.

Die Zahl der Rillen und die Zahl der Erhebungen ist vorzugsweise identisch. Das heisst, es sind immer gleich viele Rillen und Erhebungen vorhanden. In Umfangsrichtung um die Mittelachse gesehen, wechseln sich die Rillen und Erhebungen jeweils alternierend ab. Das heisst, einer Rille folgt jeweils eine Erhebung und einer Erhebung folgt jeweils eine Rille.

Vorzugsweise verlaufen die Rillen und die Erhebungen jeweils in eine Längsrichtung, die sich parallel zur Mittelachse erstreckt. In einer alternativen Ausführungsform erstrecken sich die Rillen und die Erhebungen jeweils schraubenlinienförmig um die Mittelachse herum und in Richtung der Mittelachse. Beide Ausführungsformen eignen sich gleichermassen für ein gutes Überstülpen über einen Klemmfitting.

Vorzugsweise verlaufen die Rillen und die Erhebungen jeweils parallel zueinander.

Vorzugsweise definieren die am nächsten zur Mittelachse liegenden Bereiche der Erhebungen einen Nenndurchmesser und der Grund der Rillen definiert einen Maximaldurchmesser, wobei der Maximaldurchmesser grösser ist als der Nenndurchmesser, insbesondere wobei der Maximaldurchmesser um 15% bis 20%, insbesondere um 18%, grösser ist als der Nenndurchmesser.

Der Nenndurchmesser entspricht im Wesentlichen dem Durchmesser des zu isolierenden Rohrs. Der Maximaldurchmesser entspricht im Wesentlichen dem Durchmesser des Klemmfittings im Bereich des Klemmohrs.

Vorzugsweise ist der Radialabstand zwischen dem Aussendurchmesser des Isoliermantels und dem Maximaldurchmesser grösser als der Radialabstand zwischen dem Maximaldurchmesser und dem Nenndurchmesser. Durch diese Ausbildung ergeht der Vorteil, dass die eigentliche Isolierschicht zwischen dem Maximaldurchmesser und dem Aussendurchmesser entsprechend den Isolieranforderungen ausgebildet werden kann.

In einer ersten Variante ist die Ausdehnung auf dem Kreis des Maximaldurchmessers der Rillen in Umfangsrichtung grösser als die Ausdehnung der Erhebungen. Hierdurch ergeht der Vorteil, dass die Kontaktfläche zwischen Rohr und Erhebungen in Umfangsrichtung minimiert werden kann, was das Einschieben des Rohrs in den Hohlraum erleichtert.

Nach der ersten Variante ist der Winkel, über welchen sich die Rillen erstrecken, grösser als der Winkel, über welchen sich die Erhebungen erstrecken.

In einer zweiten Variante ist die Ausdehnung auf dem Kreis des Maximaldurchmessers der Rillen in Umfangsrichtung kleiner als die Ausdehnung der Erhebungen. Hierdurch ergeht der Vorteil, dass die Kontaktfläche zwischen Rohr und Erhebungen in Umfangsrichtung maximiert werden kann, was die Stabilität und das Anliegen des Rohrs an den Erhebungen ein Vorteil ist.

Nach der zweiten Variante ist der Winkel, über welchen sich die Rillen erstrecken, kleiner als der Winkel, über welchen sich die Erhebungen erstrecken.

In einer dritten Variante ist die Ausdehnung auf dem Kreis des Maximaldurchmessers der Rillen in Umfangsrichtung gleich zur Ausdehnung der Erhebungen.

Nach der dritten Variante ist der Winkel, über welchen sich die Rillen erstrecken, gleich wie der Winkel, über welchen sich die Erhebungen erstrecken.

Der besagte Winkel wird durch zwei durch die Mittelachse und quer zur Mittelachse verlaufende Geraden definiert, welche jeweils durch einen Schnittpunkt zwischen einem mittig zwischen dem Nenndurchmesser und dem Maximaldurchmesser liegenden Teilkreis und Querschnittslinie der Erhebungen verlaufen.

Vorzugsweise sind die Rillen im Querschnitt gesehen im Wesentlichen trapezförmig ausgebildet. Hierdurch kann der Querschnitt der Rillen minimiert werden, was für die Montage der Rohrisolierung auf einem Rohr vorteilhaft ist.

Vorzugsweise sind die Ecken des Trapezes mit einer Rundung gerundet ausgebildet.

Vorzugsweise haben die Erhebungen im Querschnitt gesehen die Form eines Dreiecks, wobei der Innenwinkel an der dem Hohlraum zugewandten Dreiecksspitze zwischen 60° und 70°, insbesondere bei 65°, liegt.

Vorzugsweise ist die dem Hohlraum zugewandte Dreiecksspitze mit einer Rundung gerundet ausgebildet.

Vorzugsweise weist die Rohrisolierung weiter eine Hülle auf, welche den Isoliermantel aussenseitig umgibt, wobei die Hülle formsteifer ist als der Isoliermantel. Die Hülle schützt den Isoliermantel vor äusseren Einflüssen und verleiht der Rohrisolierung eine grössere Steifigkeit.

Der Isoliermantel ist vorzugsweise ein Schaumstoff. Die Hülle ist vorzugsweise eine Hülle aus Polyethylen.

Vorzugsweise entspricht der Querschnitt der Rille quer zur Mittelachse gesehen im Wesentlichen dem Querschnitt des Klemmohrs quer zur Mittelachse gesehen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig.1: eine perspektivische Ansicht einer Ausführungsform einer Rohrisolierung ohne Rohr;
- Fig. 2: die Ansicht der Figur 1 mit Rohr;
- Fig. 3: eine Schnittdarstellung der Figur 2;
- Fig. 4: eine perspektivische Ansicht eines erfindungsgemässen Systems mit einer Rohrisolierung nach einer der vorhergehenden Figuren und einem Klemmfitting;
- Fig. 5: eine Ansicht der Figur 4 während der Montage;
- Fig. 6: eine Schnittdarstellung durch den Klemmfitting bei übergestreifter Rohrisolierung; und
- Fig. 7: eine schematische Frontansicht der Rohrisolierung nach den vorhergehenden Figuren zur Erläuterung der Geometrie.

### BESCHREIBUNG BEVORZUGTER AUSFÜHRUNGSFORMEN

In den Figuren werden verschiedene Ansichten einer Rohrisolierung 1 gezeigt. Die Rohrisolierung 1 dient der Isolierung eines Rohrs. Beispielsweise für eine thermische Isolierung und/oder für die Isolierung von Schallemissionen durch das Rohr an die Umgebung.

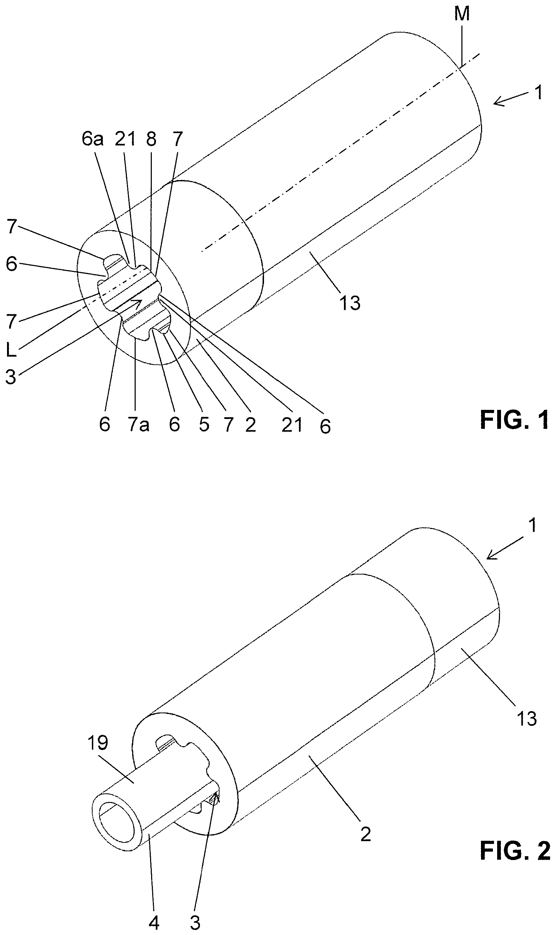

Die Figur 1 zeigt eine perspektivische Ansicht der Rohrisolierung 1. Die Rohrisolierung 1 umfasst einen Isoliermantel 2, der sich um eine Mittelachse M herumerstreckt. Der Isoliermantel 2 ist vorzugsweise aus Schaumstoff. Der Isoliermantel 2 umgibt einen Hohlraum 3 zur Aufnahme des Rohrs 4. Der Hohlraum 3 erstreckt sich entlang der Mittelachse M. Mit anderen Worten gesagt bildet der Isoliermantel 2 die Form eines Rohrs, in welches das zu isolierende Rohr 4 eingeschoben werden kann. Der Isoliermantel 2 umgibt das Rohr auf seiner Aussenseite 19 im Wesentlichen vollständig.

Die dem Hohlraum 3 bzw. die dem Rohr 4 zugewandte Oberfläche 5 des Isoliermantels 2 weist eine Mehrzahl von Erhebungen 6 und von zwischen zwei Erhebungen 6 liegenden Rillen 7 auf. Eine Erhebung 6 ist dabei durch zwei beabstandet zueinander liegenden Rillen 7 begrenzt. Gleichermassen liegen zwischen zwei benachbarten Erhebungen 6 eine Rille 7. Die Erhebungen 6 und die Rillen 7 sind dabei derart angeordnet, dass im Querschnitt quer zur Mittelachse M gesehen, jeweils eine Rille 7 je einer Erhebung 6 diametral zum Hohlraum 3 bzw. diametral zur Mittelachse M gegenüber liegt. Dies wird in der Figur 1 durch die mit dem Bezugszeichen 6a bezeichnete Erhebung und durch die mit dem Bezugszeichen 7a bezeichnete Rille dargestellt. Die Rille 7a liegt dabei der Erhebung 6a quer zum Hohlraum 3 gesehen, gegenüber. Diese gegenüberliegende Anordnung zwischen einer Rille 7 und einer Erhebung 6 hat den Vorteil, dass der Isoliermantel 2 für die Aufnahme eines Rohrs 4 bzw. für die Aufnahme eines Rohrs 4 mit einem Klemmfitting 14 vorteilhaft ausgebildet ist. Einerseits bilden die Erhebungen 6 und die Rillen 7 eine Struktur, welche ein leichtes Einschieben des Rohrs 4 erlauben; andererseits wird durch die Rillen 7 eine Aufnahmestruktur für radial vom Klemmfitting 14 abstehende Teile, wie beispielsweise ein Klemmohr 18, geschaffen.

Die Zahl der Rillen 7 und die Zahl der Erhebungen 6 ist jeweils ungerade. In der gezeigten Ausführungsform sind fünf Rillen 7 und fünf Erhebungen 6 angeordnet. Es können aber auch weniger, beispielsweise 3, oder mehr Erhebungen 6 bzw. Rillen 7 angeordnet sein. Dies hängt im Wesentlichen vom Durchmesser des Rohrs 4 und von der Form des Klemmfittings 14 ab. Zweckmässigerweise sind aber typischerweise weniger als neun Erhebungen 6 bzw. Rillen 7 angeordnet. Bei besonders grossen Durchmessern kann die Zahl der Erhebungen 6 bzw. Rillen 7aber auch grösser sein.

Die Form von allen Erhebungen 6 und die Form von allen Rillen 7 ist jeweils identisch zueinander. Das heisst, dass alle Erhebungen 6 jeweils formgleich zueinander ausgebildet sind und dass alle Rillen 7 jeweils formgleich zueinander ausgebildet sind.

In der gezeigten Ausführungsform verlaufen die Rillen 7 und die Erhebungen 6 jeweils in eine Längsrichtung L. Die Längsrichtung L erstreckt sich dabei parallel zur Mittelachse M.

In einer alternativen Ausführungsform können sich die Rillen 7 und die Erhebungen 6 jeweils auch schraubenlinienförmig um die Mittelachse herum erstrecken.

In allen Ausführungsformen verlaufen die Rillen 7 und die Erhebungen 6 jeweils parallel zueinander.

In der Figur 2 wird eine perspektivische Ansicht der Rohrisolierung 1 mit einem Rohr 4 gezeigt. Hier kann gut erkannt werden, dass das Rohr im Hohlraum 3 liegt und insbesondere in Kontakt mit den Erhebungen 6 steht.

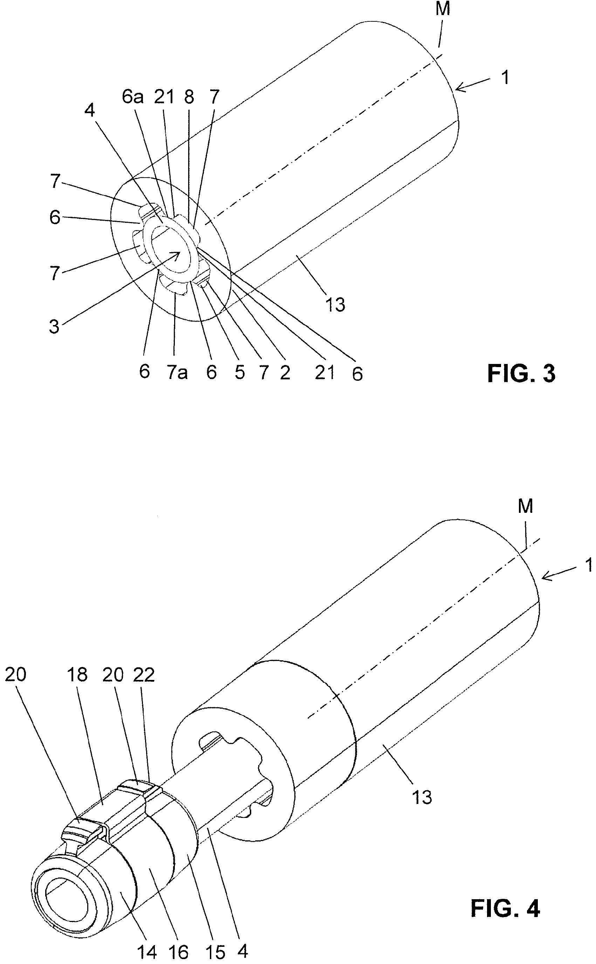

Die Figur 3 zeigt sodann eine Schnittdarstellung quer zur Mittelachse. Auch in dieser Darstellung kann gut erkannt werden, dass das Rohr 4 mit seiner Aussenseite 19 auf der Spitze der Rillen 7 aufliegt. Das heisst, es gibt zwischen dem Rohr 4 und dem eigentlichen Isoliermantel 2 im Bereich der Rillen 7 eine Luftkammer, welche eine zusätzliche Isolierwirkung bezüglich der thermischen Isolation hat.

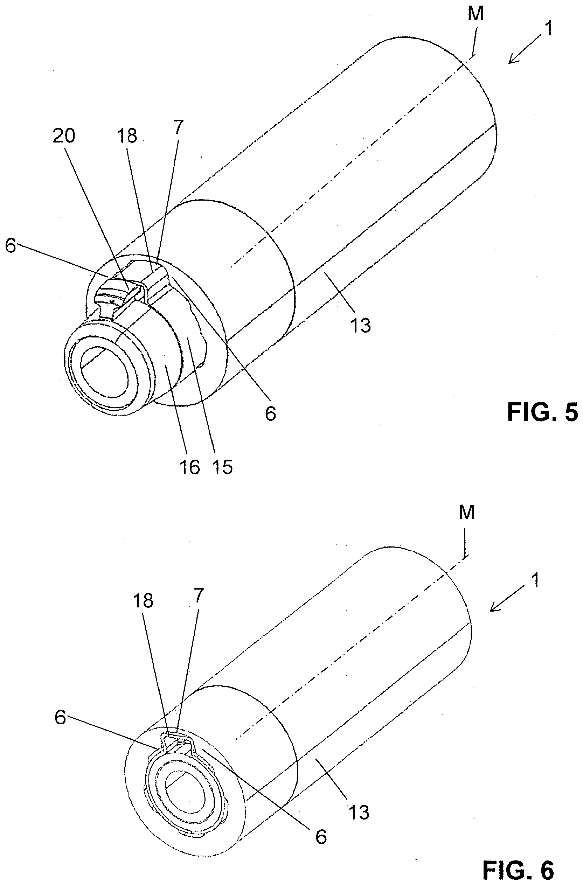

In den Figuren 4 bis 6 wird sodann die Rohrisolierung 1 im Verbund eines Systems dargestellt. Das System umfasst dabei die oben beschriebene Rohrisolierung 1, ein Rohr 4 und ein am Rohrende des Rohrs 4 angeordneter Klemmfitting 14.

Der Klemmfitting 14 umfasst ein Klemmelement 15 und ein Klemmring 16. Das Klemmelement 15 steht in Kontakt mit dem Rohr 4 und der Klemmring 16 umgibt das Klemmelement 15. Der Klemmring 16 umfasst einen Ringabschnitt 17 und ein Klemmohr 18. Ringabschnitt 17 und Klemmohr 18 umgeben dabei das Klemmelement 14 umfangsseitig. Das Klemmohr 18 steht radial vom Ringabschnitt 17 ab und durch eine Verformung des Klemmohrs 18 wird über den Ringabschnitt 17 eine Klemmwirkung auf das Klemmelement 14 und sodann auf das Rohr 4 aufgebracht.

In den Figuren 4 bis 6 wird dargestellt, dass das Klemmohr 17 in Einbaulage im Bereich einer Rille 7 des Isoliermantels 2 zu liegen kommt. Das Klemmohr 17 liegt also zwischen zwei Erhebungen 6. Diese Anordnung hat den Vorteil, dass die Kräfte, welche beim Überschieben des Isoliermantels 2 über den Klemmfitting 14 erforderlich sind, reduziert werden können. Zudem entfällt ein aufwändiges Aufschneiden und wieder Verkleben des Isoliermantels 2 im Bereich des Klemmfittings 14.

Vorzugsweise ist der Querschnitt der Rille 7 quer zu Mittelachse M gesehen im Wesentlichen gleich dem Querschnitt des Klemmohrs 17 quer zur Mittelachse M gesehen. Hierdurch wird eine besonders einfache Montagemöglichkeit erlaubt. In der gezeigten Ausführungsform liegt das Klemmohr 17 zwischen zwei Nocken 20, welche beidseitig vom Klemmohr 18 vom Klemmelement 15 abstehen. Der Querschnitt der Nocken 20 quer zur Mittelachse M gesehen ist dabei vorzugsweise gleich wie oder kleiner als der Querschnitt des Klemmohrs 18. Die Nocken 20 sind vorzugsweise zum Isoliermantel 2 hin mit einer abgeschrägten Fläche 22 ausgebildet, welche das Überstreifen des Isoliermantels 2 vereinfacht.

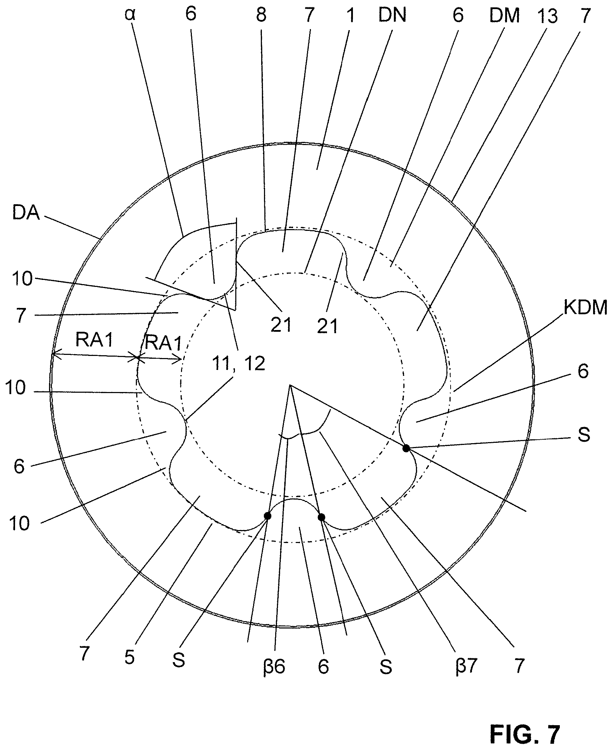

In der Figur 7 wird eine schematische Frontansicht bzw. Schnittansicht quer zur Mittelachse M der Rohrisolierung 1 gezeigt. Anhand dieser Figur wird nun die Geometrie der Rillen 7 bzw. der Erhebungen 6 genauer erläutert.

Die am nächsten zur Mittelachse M liegenden Bereiche der Erhebungen 6 definieren einen Nenndurchmesser DN. Der Nenndurchmesser DN ist in der Figur 7 mit einem punktiertgestrichelten Kreis eingezeichnet. Der Nenndurchmesser DN entspricht im Wesentlichen dem Aussendurchmesser des einzuschiebenden Rohrs 4. Der Grund 8 der Rillen 7 definiert einen Maximaldurchmesser DM. Der Maximaldurchmesser DM ist ebenfalls durch einen Kreis eingezeichnet. Der Maximaldurchmesser DM ist dabei grösser als der Nenndurchmesser DN. Besonders bevorzugt ist der Maximaldurchmesser DM um 15% bis 20% grösser als der Nenndurchmesser DN. Bei grossen Rohrdurchmessern ist das Verhältnis tendenziell kleiner als bei kleineren Rohrdurchmessern.

Der Radialabstand RA1 zwischen dem Aussendurchmesser DA des Isoliermantels 2 und dem Maximaldurchmesser DM ist grösser als der Radialabstand RA2 zwischen dem Maximaldurchmesser DM und dem Nenndurchmesser DN. Das heisst, die minimale Dicke des Isoliermantels 2 ist grösser als die maximale Tiefe der Rillen 7.

In der gezeigten Ausführungsform ist die Ausdehnung der Rillen 7 in Umfangsrichtung grösser als die Ausdehnung der Erhebungen 6. Als Bezugsgrösse gilt dabei der Kreis KDM des Maximaldurchmessers DM. Auf dem Kreis KDM kann gut erkannt werden, dass die Rille eine grössere Ausdehnung aufweist als die Erhebungen.

Diese Ausdehnung kann aber auch über den Winkel β definiert werden. Der Winkel β7 über welchen sich die Rillen 7 erstrecken, ist dabei grösser als der Winkel β6 über welchen sich die Erhebungen 6 erstrecken. Die Winkel β7 bzw. β6 werden durch zwei durch die Mittelachse M und quer zur Mittelachse M verlaufende Geraden definiert, welche jeweils durch einen Schnittpunkt zwischen einem mittig zwischen dem Nenndurchmesser DN und dem Maximaldurchmesser DM liegenden Teilkreis und der Querschnittslinie der Erhebungen 6 verlaufen. Der Schnittpunkt trägt das Bezugszeichen S.

Im Querschnitt gesehen sind die Rillen 7 im Wesentlichen trapezförmig ausgebildet. Das heisst, die Rillen 7 werden durch einen Grund 8 und eine Seitenwand 21 begrenzt. Die Seitenwand 21wird dabei durch die Erhebung 6, welche die Rille 7 seitlich begrenzt, bereitgestellt. Zum Hohlraum 3 hin gesehen ist die Rille 7 offen, das heisst, dass das Trapez zum Hohlraum 3 nicht begrenzt ist. Die Ecken des Trapezes sind mit einer Rundung 10 gerundet ausgebildet. Vom Grund 8 gesehen geht die Rille 7 mit der Rundung 10 in die Erhebung 6 über.

Die Erhebungen 6 weisen im Querschnitt gesehen die Form eines Dreiecks auf. Der Innenwinkel α an der dem Hohlraum 3 zugewandten Dreieckspitze 11 ist zwischen 60 Grad und 70 Grad, insbesondere bei 65 Grad. Die dem Hohlraum 3 zugewandte Dreieckspitze 11 ist mit einer Rundung 12 ausgebildet.

In den gezeigten Ausführungsformen weist die Rohrisolierung 1 weiter eine Hülle 13 auf. Die Hülle 13 ist formsteifer bzw. formstabiler als der Isoliermantel 2. Die Hülle 13 umgibt den Isoliermantel 2 aussenseitig und sorgt für eine Erhöhung der Stabilität und der Robustheit der Rohrisolierung 1.

### BEZUGSZEICHENLISTE

| | | | |
|---|---|---|---|
| 1 | Rohrisolierung | 18 | Klemmohr |
| 2 | Isoliermantel | 19 | Aussenseite |
| 3 | Hohlraum | 20 | Nocken |
| 4 | Rohr | 21 | Seitenwand |
| 5 | Oberfläche | 22 | abgeschrägte Fläche |
| 6 | Erhebungen | α | Innenwinkel |
| 7 | Rillen | β6 | Winkel |
| 8 | Grund | β7 | Winkel |
| 9 | Ecke | | |
| 10 | Rundung | DA | Aussendurchmesser |
| 11 | Dreiecksspitze | DM | Maximaldurchmesser |
| 12 | Rundung | DN | Nenndurchmesser |
| 13 | Hülle | L | Längsrichtung |
| 14 | Klemmfitting | M | Mittelachse |
| 15 | Klemmelement | S | Schnittpunkt |
| 16 | Klemmring | KDM | Kreis |
| 17 | Ringabschnitt | | |

## Patentansprüche

1. System umfassend eine Rohrisolierung (1) sowie ein Rohr (4) mit einem Klemmfitting (14),
wobei die Rohrisolierung (1) einen Isoliermantel (2), insbesondere aus Schaumstoff, umfasst, wobei der Isoliermantel (2) sich um eine Mittelachse (M) herum erstreckt und einen Hohlraum (3) zur Aufnahme des Rohrs (4) vollständig umgibt und
wobei die dem Hohlraum (3) zugewandte Oberfläche (5) des Isoliermantels (2) eine Mehrzahl von Erhebungen (6) und zwischen zwei Erhebungen (6) liegenden Rillen (7) aufweist, wobei im Querschnitt quer zur Mittelachse (M) gesehen jeweils eine Rille (7) je einer Erhebung (6) diametral zum Hohlraum (3) bzw. zur Mittelachse (M) gegenüber liegt,
wobei der Klemmfitting (14) ein Klemmelement (15) und einen Klemmring (16) umfasst, welches Klemmelement (15) mit dem Rohr (4) verbindbar ist und welcher Klemmring (16) das Klemmelement (15) umfangsseitig mit einem Ringabschnitt (17) und einem Klemmohr (18) umgibt, welches Klemmohr (18) radial vom Ringabschnitt (17) absteht und durch eine Verformung über den Ringabschnitt (17) eine Klemmwirkung bereitstellt, und
wobei das Klemmohr (17) in Einbaulage im Bereich einer Rille (7) des Isoliermantels (2) zu liegen kommt.

2. System (1) nach Anspruch 1, **dadurch gekennzeichnet, dass** die Zahl der Rillen (7) und die Zahl der Erhebungen (6) jeweils ungerade ist.

3. System (1) nach Anspruch 1 oder 2, **dadurch gekennzeichnet, dass** die Zahl der Rillen (7) und die Zahl der Erhebungen (6) jeweils zwischen 3 und 9, insbesondere zwischen 4 und 7, insbesondere 5 ist.

4. System (1) nach einem der vorhergehenden Ansprüche, **dadurch gekennzeichnet, dass** die Rillen (7) und die Erhebungen (6) jeweils in eine Längsrichtung (L), die sich parallel zur Mittelachse (M) erstreckt, verlaufen; oder dass die Rillen (7) und die Erhebungen (6) sich jeweils schraubenlinienförmig um die Mittelachse (M) herum und in Richtung der Mittelachse (M) erstrecken.

5. System (1) nach einem der vorhergehenden Ansprüchen, **dadurch gekennzeichnet, dass** die am nächsten zur Mittelachse (M) liegenden Bereiche der Erhebungen (6) einen Nenndurchmesser (DN) definieren, und dass der Grund (8) der Rillen (7) einen Maximaldurchmesser (DM) definiert, wobei der Maximaldurchmesser (DM) grösser ist als der Nenndurchmesser (DN), insbesondere wobei der Maximaldurchmesser (DM) um 15% bis 20% grösser ist als der Nenndurchmesser (DN).

6. System (1) nach Anspruch 5, **dadurch gekennzeichnet, dass** der Radialabstand (RA1) zwischen dem Aussendurchmesser (DA) des Isoliermantels (2) und dem Maximaldurchmesser (DM) grösser ist als der Radialabstand (RA2) zwischen dem Maximaldurchmesser (DM) und dem Nenndurchmesser (DN).

7. System (1) nach Anspruch 6, **dadurch gekennzeichnet,**
**dass** auf dem Kreis (KDM) des Maximaldurchmessers (DM) die Ausdehnung der Rillen (7) in Umfangsrichtung grösser ist als die Ausdehnung der Erhebungen (6); oder
**dass** auf dem Kreis (KDM) des Maximaldurchmessers (DM) die Ausdehnung der Rillen (7) in Umfangsrichtung kleiner ist als die Ausdehnung der Erhebungen (6); oder
**dass** auf dem Kreis (KDM) des Maximaldurchmessers (DM) die Ausdehnung der Rillen (7) in Umfangsrichtung gleich zur Ausdehnung der Erhebungen (6) ist.

8. System (1) nach einem der vorhergehenden Ansprüche, **dadurch gekennzeichnet, dass** die Rillen (7) im Querschnitt gesehen im Wesentlichen trapezförmig ausgebildet sind.

9. System (1) nach Anspruch 8, **dadurch gekennzeichnet, dass** die Ecken (9) des Trapezes mit einer Rundung (10) gerundet ausgebildet sind.

10. System (1) nach einem der vorhergehenden Ansprüchen, **dadurch gekennzeichnet, dass** die Erhebungen (6) im Querschnitt gesehen die Form eines Dreiecks haben, wobei der Innenwinkel (α) an der dem Hohlraum (3) zugewandten Dreiecksspitze (11) zwischen 60° und 70°, insbesondere bei 65°, liegt.

11. System (1) nach Anspruch 10, **dadurch gekennzeichnet, dass** die dem Hohlraum (3) zugewandte Dreiecksspitze (11) mit einer Rundung (12) gerundet ausgebildet ist.

12. System (1) nach einem der vorhergehenden Ansprüche, **dadurch gekennzeichnet, dass** die Rohrisolierung (1) weiter eine Hülle (13) aufweist, welche den Isoliermantel (2) aussenseitig umgibt, wobei die Hülle (13) formsteifer ist als der Isoliermantel (2).

13. System nach einem der vorhergehenden Ansprüche, **dadurch gekennzeichnet, dass** der Querschnitt der Rille (7) quer zur Mittelachse (M) gesehen im Wesentlichen dem Querschnitt des Klemmohrs (17) quer zur Mittelachse (M) gesehen entspricht.

## Claims

1. System comprising a pipe insulation (1) as well as a pipe (4) with a clamp fitting (14),
wherein the pipe insulation (1) comprises an insulating jacket (2), in particular of foamed material, wherein the insulating jacket (2) extends around a center axis (M) and completely encloses a cavity (3) for the reception of the pipe (4) and
wherein the surface (5) of the insulating jacket (2) facing the cavity (3) comprises a plurality of projections (6) and grooves (7) lying between two projections (6), wherein when viewed in the cross-section transverse to the center axis (M), in each case one groove (7) lies across from one groove (6) diametrically to the cavity (3) or to the center axis (M), respectively,
wherein the clamp fitting (14) comprises a clamping element (15) and a clamping ring (16), wherein the clamping element (15) is connectable to the pipe (4) and wherein the clamping ring (16) surrounds the clamping element (15) in a circumferential direction with an annular section (17) and a clamping ear (18), the clamping ear (18) projecting radially from the annular section (17) and provides a clamping effect by a deformation via the annular section (17), and
wherein the clamping ear (17) comes to lie in the region of a groove (7) of the insulating jacket (18) in the installation position.

2. System (1) according to claim 1, **characterized in that** the number of grooves (7) and the number of projections (6) in each case is uneven.

3. System (1) according to claim 1 or 2, **characterized in that** the number of the grooves (7) and the number of the projections (6) is in each case between 3 and 9, in particular between 4 and 7, in particular 5.

4. System (1) according to one of the preceding claims, **characterized in that** the grooves (7) and the projections (6) in each case extend in a longitudinal direction (L), which extends parallel to the center axis (M); or that the grooves (7) and the projections (6) in each case extend along a helical line around the center axis (M) and in a direction of the center axis (M).

5. System (1) according to one of the preceding claims, **characterized in that** the regions of the projections (6) lying the closest to the center axis (M) define a nominal diameter (DN), and that the bottom (8) of the grooves (7) defines a maximum diameter (DM), wherein the maximum diameter (DM) is larger than the nominal diameter (DN), in particular wherein the maximum diameter (DM) is 15%-20% larger than the nominal diameter (DN).

6. System (1) according to claim 5, **characterized in that** the radial distance (RA1) between the external diameter (DA) of the insulating jacket (2) and the maximum diameter (DM) is larger than the radial distance (RA2) between the maximum diameter (DM) and the nominal diameter (DN).

7. System (1) according to claim 6, **characterized in that**
on the circle (KDM) of the maximum diameter (DM), the extent of the grooves (7) in the circumferential direction is larger than the extent of the projections (6); or
that on the circle (KDM) of the maximum diameter (DM) the extent of the grooves (7) in the circumferential direction is smaller than the extent of the projections (6); or
that on the circle (KDM) of the maximum diameter (DM) the extent of the grooves (7) in the circumferential direction is equal to the extent of the projections (6).

8. System (1) according to one of the preceding claims, **characterized in that** the grooves (7) are formed essentially trapezoidal when viewed in the cross-section.

9. System (1) according to claim 8, **characterized in that** the corners (9) of the trapeze are formed in a rounded manner with a rounding (10).

10. System (1) according to one of the preceding claims, **characterized in that** the projections (6) have the form of a triangle when viewed in the cross-section, wherein the interior angle (α) at the tip (11) of the triangle facing the cavity (3) lies between 60° and 70°, in particular at 65°.

11. System according to claim 10, **characterized in that** the tip (11) of the triangle facing the cavity (3) is formed in a rounded manner with a rounding (12).

12. System (1) according to one of the preceding claims, **characterized in that** the pipe insulation (1) further comprises a jacket (13) which encloses the insulating jacket (2) on the exterior, wherein the jacket (13) is more rigid than the insulating jacket (2).

13. System (1) according to one of the preceding claims, **characterized in that** the cross-section of the groove (7) when viewed transverse to the center axis (M), essentially corresponds to the cross-section of the clamping ear (17) when viewed transverse to the center axis (M).

## Revendications

1. Système comprenant une isolation de tuyau (1), ainsi qu'un tuyau (4) avec un raccord de serrage (14),
dans lequel l'isolation de tuyau (1) comprend une gaine isolante (2), notamment en mousse, dans laquelle la gaine isolante (2) s'étend autour d'un axe central (M) et entoure complètement une cavité (3) pour la réception du tuyau (4) et dans lequel la surface faisant face à la cavité (5) de la gaine isolante (2) présente une pluralité d'élévations (6) et des rainures (7) situées entre deux élévations (6), dans lequel, vu en coupe transversale transversalement à l'axe central (M), respectivement une rainure (7) par élévation (6) se situe diamétralement à la cavité (3) respectivement en face à l'axe central (M), dans lequel le raccord de serrage (14) comprend un élément de serrage (15) et une bague de serrage (16),
lequel élément de serrage (15) peut être raccordé au tuyau (4) et laquelle bague de serrage (16) entoure l'élément de serrage (15) du côté circonférentiel avec une section annulaire (17) et une patte de serrage (18), laquelle patte de serrage (18) fait saillie radialement à partir de la section annulaire (17) et fournit un effet de serrage par le biais d'une déformation de la section annulaire (17), et
dans lequel la patte de serrage (17), en position de montage, vient se poser dans la zone d'une rainure (7) de la gaine isolante (2).

2. Système (1) selon la revendication 1, **caractérisé en ce que** le nombre de rainures (7) et le nombre d'élévations (6) sont chacun impairs.

3. Système (1) selon la revendication 1 ou 2, **caractérisé en ce que** le nombre de rainures (7) et le nombre d'élévations (6) est respectivement compris entre 3 et 9, en particulier entre 4 et 7, notamment 5.

4. Système (1) selon l'une des revendications précédentes, **caractérisé en ce que** les rainures (7) et les élévations (6) s'étendent chacune dans une direction longitudinale (L), qui s'étend parallèlement à l'axe central (M); ou que les rainures (7) et les élévations (6) s'étendent chacune en hélice autour de l'axe central (M) et en direction de l'axe central (M).

5. Système (1) selon l'une des revendications précédentes, **caractérisé en ce que** les zones des élévations (6) les plus proches de l'axe central (M) définissent un diamètre nominal (DN), et **en ce que** le fond (8) des rainures (7) définit un diamètre maximal (DM), dans lequel le diamètre maximal (DM) est pl36us grand que le diamètre nominal (DN), en particulier dans lequel le diamètre maximal (DM) étant de 15% à 20% plus grand que le diamètre nominal (DN).

6. Système (1) selon la revendication 5, **caractérisé en ce que** la distance radiale (RA1) entre le diamètre extérieur (DA) de la gaine isolante (2) et le diamètre maximal (DM) est plus grand que la distance radiale (RA2) entre le diamètre maximal (DM) et le diamètre nominal (DN).

7. Système (1) selon la revendication 6, **caractérisé en ce que**
sur le cercle (KDM) du diamètre maximal (DM), l'étendue des rainures (7) dans la direction circonférentielle est plus grande que l'étendue des élévations (6); ou
sur le cercle (KDM) du diamètre maximal (DM), l'étendue des rainures (7) dans la direction circonférentielle est plus petite que l'étendue des élévations (6); ou
que sur le cercle (KDM) du diamètre maximal (DM), l'étendue des rainures (7) dans la direction circonférentielle est égale à l'étendue des élévations (6).

8. Système (1) selon l'une des revendications précédentes, **caractérisé en ce que** les rainures (7) sont essentiellement trapézoïdales, vu en coupe transversale.

9. Système (1) selon la revendication 8, **caractérisé en ce que** les coins (9) du trapèze sont réalisés de manière arrondie avec un arrondi (10).

10. Système (1) selon l'une des revendications précédentes, **caractérisé en ce que** les élévations (6) ont la forme d'un triangle, vu en coupe transversale, dans lequel l'angle intérieur (α) au bout triangulaire (11) tournée vers la cavité (3) se situe entre 60 ° et 70 °, en particulier à 65 °.

11. Système (1) selon la revendication 10, **caractérisé en ce que** la pointe triangulaire (11) tournée vers la cavité (3) est réalisé de manière arrondie avec un arrondi (12).

12. Système (1) selon l'une des revendications précédentes, **caractérisé en ce que** l'isolation de tuyau (1) présente en outre une gaine (13), qui entoure la gaine isolante (2) du côté extérieur, dans lequel la gaine (13) est plus stable dimensionnellement que la gaine isolante (2).

13. Système (1) selon l'une des revendications précédentes, **caractérisé en ce que** la section transversale de la rainure (7), vu transversalement à l'axe central (M), correspond essentiellement à la section transversale de la patte de serrage (17), vu transversalement à l'axe central (M).
